# DEMANDE DE BREVET EUROPEEN

(11) **EP 3 045 999 A1**
(43) Date de publication de la demande: **20.07.2016**
(21) Numéro de dépôt: 16150738.9
(22) Date de dépôt: 11.01.2016
(51) Int. Cl.: G05D 23/19, G05B 15/02, F24F 11/00

(54) **DISPOSITIF THERMIQUE AMELIORE**

(30) Priorité: 13.01.2015 FR 1550259
(71) Demandeur: Ecometering, 92400 Courbevoie (FR)
(72) Inventeur: LHOUR, Yann-Edern, 92400 Courbevoie (FR); de CREVOISIER, Stanislas, 92300 Levallois-Perret (FR); BERGERET, Florent, 93800 Epinay sur Seine (FR)
(74) Mandataire: Cabinet Netter

(57) **Abrégé**

Un dispositif de gestion (2) d'un ensemble de chauffage d'un logement (3) comprend une entrée de données de consommation énergétique et de températures de consigne, intérieure et extérieure, une sortie de données de consommation, un stockage de modèles des échanges thermiques et un processeur agencé pour:
- déterminer par simulation une durée de chauffage (6) nécessaire pour respecter des consignes de température intérieure en fonction de températures extérieures, et
- déterminer des données de consommation énergétique en fonction d'une durée de chauffage et de données de consommation passées,
- calculer des données de consommation en déterminant successivement une durée de chauffage par simulation, et des données de consommation sur un ensemble de données de température de consigne couplées à des plages horaires.

## Description

L'invention concerne le domaine de la domotique, et en particulier la gestion thermique.

La gestion énergétique est un domaine de la domotique qui se développe du fait de l'augmentation du coût de l'énergie, en particulier en ce qui concerne le chauffage des logements. Ainsi, de plus en plus de logements présentent des thermostats pour contrôler la consommation électrique et/ou de gaz (ou d'un autre type d'énergie) tout en optimisant le confort.

Cependant, les systèmes de thermostats sont peu pratiques à l'utilisation. En effet, ils permettent de commander un équipement pour atteindre une température de consigne, mais ils ne permettent ni de savoir en combien de temps cette consigne sera atteinte, ni même s'il est possible de l'atteindre.

Par exemple, dans le cas des thermostats permettant d'indiquer une température dite de jour (ou de confort, lorsque l'habitant est présent) et une température de nuit (ou d'économie, lorsque l'habitant est absent), la différence entre ces deux consignes peut être impossible à combler dans les plages horaires allouées. Cela rend le thermostat inefficace. De plus, comme il n'est pas possible de savoir quelle est la durée nécessaire pour atteindre une température donnée, de nombreux utilisateurs entrent une consigne supérieure à celle réellement recherchée, dans l'espoir d'accélérer le chauffage. Cela se traduit par un accroissement inutile de la consommation énergétique.

Au-delà de ces problèmes, aucun système ne permet actuellement à un utilisateur de connaître la relation entre l'obtention d'une température souhaitée et la consommation énergétique nécessaire pour obtenir cette température. De même, aucun système ne permet de gérer sa consommation en tenant compte de son budget, c'est-à-dire permettre d'optimiser le confort selon les choix de l'utilisateur en conservant une enveloppe budgétaire déterminée, et en indiquant des informations budgétaires à l'utilisateur.

Il existe donc un besoin d'améliorer la gestion de la température des habitations, au moins en ce qui concerne la possibilité de connaître le temps nécessaire pour passer d'une température à une autre.

L'invention améliore la situation en proposant un dispositif de gestion thermique qui comprend un processeur, une entrée pour des données de température de consigne, de température intérieure, de température extérieure, et de consommation énergétique d'un ensemble de chauffage d'un logement dans lequel est utilisé le dispositif, une sortie pour des données de consommation, et un stockage recevant des données de modèle des échanges thermiques du logement et de l'ensemble de chauffage.

Le processeur met en oeuvre :
- une fonction de simulation déterminant une durée d'activation de l'ensemble de chauffage nécessaire pour respecter des consignes de température intérieure du logement en fonction de températures extérieures, et
- une fonction de consommation déterminant des données de consommation énergétique de l'ensemble de chauffage en fonction d'une durée d'activation et de données de consommation passées de l'ensemble de chauffage,

Le processeur est en outre agencé pour calculer des données de consommation en appliquant successivement la fonction de simulation et la fonction de consommation à un ensemble de données de température de consigne couplées à des plages horaires.

Ce dispositif est très avantageux car il permet, à travers un modèle physique, de pouvoir s'adapter à toutes les conditions et d'offrir à un utilisateur un véritable pilotage budgétaire de sa consommation.

Selon les variantes, le dispositif pourra présenter une ou plusieurs des caractéristiques suivantes :
- la fonction de simulation détermine une durée d'activation de l'ensemble de chauffage nécessaire pour que la température intérieure du logement atteigne une température de consigne à partir d'une température intérieure de départ, en fonction de données de température extérieure,
- le processeur est en outre agencé pour déterminer si un ensemble de données de température de consigne couplées à des plages horaires conduisent à des données de consommation compatibles avec des données de consommation cibles,
- le processeur est en outre agencé pour modifier les consignes de températures lorsqu'il détermine une incompatibilité entre des données de consommation calculées et des données de consommation cibles,
- le processeur est en outre agencé pour modifier les plages horaires lorsqu'il détermine une incompatibilité entre des données de consommation calculées et des données de consommation cibles,
- le processeur est agencé pour déterminer si l'ensemble de données de température de consigne et/ou les plages horaires modifiées conduisent à des données de consommation compatibles avec des données de consommation cibles,
- la durée d'activation et les données de consommation passées de l'ensemble de chauffage sont déterminées par l'application d'une méthode de type NIALM,
- la fonction de simulation applique une régulation de type tout ou rien, proportionnelle, proportionnelle intégrale, ou proportionnelle intégrale dérivée,
- le dispositif est agencé pour afficher une comparaison entre des données de consommation pour une période courante et des données de consommation cibles pour la période courante.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma générique d'un dispositif selon l'invention dans son environnement,
- la figure 2 représente un diagramme en exemple d'une fonction du dispositif de la figure 1,
- la figure 3 représente un diagramme en exemple d'une fonction de la figure 2,
- la figure 4 représente un diagramme électrique d'un premier modèle utilisé par le dispositif de la figure 1,
- la figure 5 représente un diagramme électrique d'un deuxième modèle utilisé par le dispositif de la figure 1, et
- la figure 6 représente un diagramme en exemple d'une autre fonction du dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

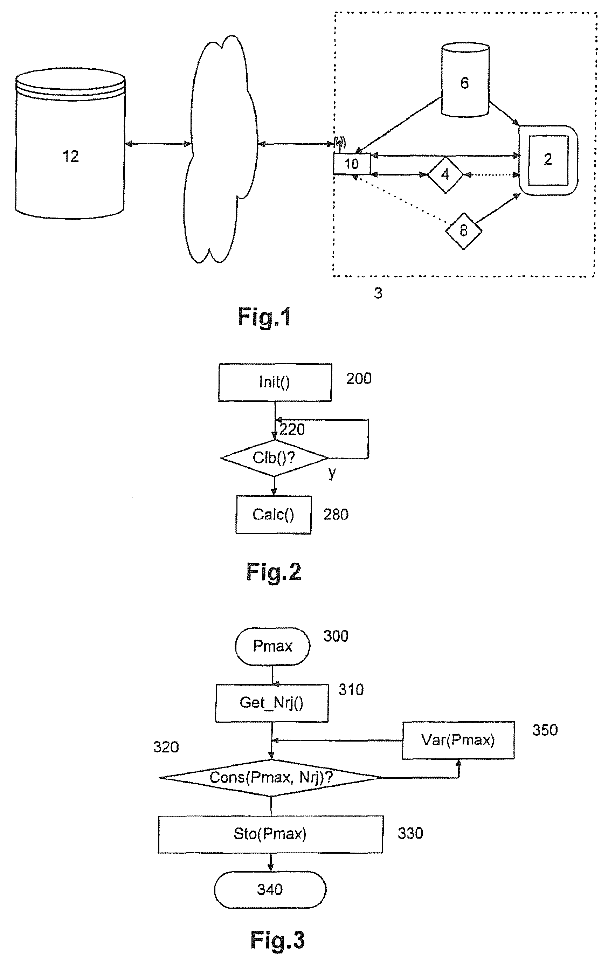

La figure 1 représente un schéma générique d'un dispositif de gestion thermique 2 selon l'invention dans son environnement. Le dispositif 2 est un appareil électronique utilisé dans un logement 3. Le logement 3 reçoit en outre un capteur de consommation énergétique 4, un ensemble de chauffage 6, une sonde de température intérieure 8 et un dispositif d'accès à Internet 10.

Le dispositif de gestion thermique 2 est dans l'exemple décrit ici un appareil qui présente une interface utilisateur, un processeur, un stockage et un ou plusieurs moyens d'entrée pour permettre à un utilisateur d'indiquer une température de consigne pour laquelle il souhaite connaître le temps de chauffage nécessaire.

L'interface utilisateur peut être tout affichage classique du type écran, ou encore un dispositif de restitution sonore ou visuelle, une application sur un smartphone ou une tablette, ou toute autre interface adaptée.

Le processeur est choisi en fonction des fonctionnalités assurées par le dispositif de gestion thermique 2. Ainsi, s'il s'agit uniquement d'afficher une durée pour atteindre une température de consigne, un simple DSP ou microcontrôleur. À l'inverse, si les fonctions du dispositif de gestion thermique 2 sont mises en oeuvre par le biais d'une application sur un dispositif électronique comme un téléphone portable ou une tablette, le processeur pourra être beaucoup plus puissant. D'autres processeurs pourront également être envisagés en fonction des besoins en puissance de calcul du dispositif de gestion thermique 2.

Le stockage peut enfin être tout moyen de stocker des informations : de la mémoire Flash, de la mémoire RAM, un disque dur, une connexion à un stockage déporté dans le logement 3 ou dans le cloud, etc.

Les moyens d'entrée peuvent être réalisés de toute manière connue, par exemple par des boutons, par un clavier tactile, par un clavier ou autre moyen de saisie déporté relié de manière filaire ou sans-fil au processeur du dispositif de gestion thermique 2.

L'ensemble de chauffage 6 comprend tous les dispositifs qui consomment de l'énergie, qui peuvent être commandés, et qui servent à chauffer le logement 3. L'ensemble de chauffage 6 peut donc être un ou plusieurs radiateurs électriques, un ensemble chaudière à gaz, à fuel ou à bois, et un ou plusieurs radiateurs à eau, une combinaison des deux, ou avec tout autre dispositif ou ensemble de chauffage. L'ensemble de chauffage 6 comprend des moyens de communication filaires ou sans fil avec le dispositif de gestion thermique 2 et/ou avec la sonde de température intérieure 8 et/ou avec le dispositif d'accès à Internet 10.

La sonde de température intérieure 8 peut être réalisée au moyen d'une sonde thermique simple, d'un thermostat ou de tout autre capteur de température. La sonde de température intérieure 8 comprend des moyens de communication filaires ou sans fil avec le dispositif de gestion thermique 2 et/ou avec l'ensemble de chauffage 6 et/ou avec le dispositif d'accès à Internet 10.

Le dispositif de gestion thermique 2, l'ensemble de chauffage 6 et la sonde de température intérieure 8 sont reliés au dispositif d'accès à Internet, de sorte qu'ils peuvent échanger des données et/ou des commandes de pilotage. En variante, l'ensemble de chauffage 6 et la sonde de température 8 sont reliés au dispositif d'accès à Internet 10 à travers le dispositif de gestion thermique 2. Dans ce cas, la connexion entre d'une part l'ensemble de chauffage 6 et la sonde de température 8, et d'autre part le dispositif d'accès à Internet 10 est optionnelle, de même que la connexion entre le capteur 4 et le dispositif 2. Toujours en variante, le dispositif de gestion thermique 2 et le dispositif d'accès à Internet 10 forment un seul dispositif.

Dans l'exemple décrit ici, le dispositif d'accès à Internet 10 est relié par Internet (représenté par un nuage) à un serveur 12. Comme on le verra plus bas, le serveur 12 peut assister dans la configuration du dispositif de gestion thermique 2, fournir des données de température extérieure et/ou de rayonnement solaire, ou toute autre donnée météorologique, réaliser des calculs ou être optionnel.

Comme cela apparaîtra mieux avec la description de la figure 2, le dispositif de gestion thermique 2 permet de gérer la consommation l'obtention d'une température de consigne.

La figure 2 représente un diagramme en exemple d'un fonctionnement du dispositif de la figure 1.

Tout commence par une opération 200 dans laquelle une fonction Init() est exécutée. La fonction Init() vise à assurer que tous les éléments avec lesquels la connexion est nécessaire sont accessibles, comme le capteur 4, l'ensemble de chauffage 6, la sonde de température intérieure 8 et le dispositif d'accès Internet 10.

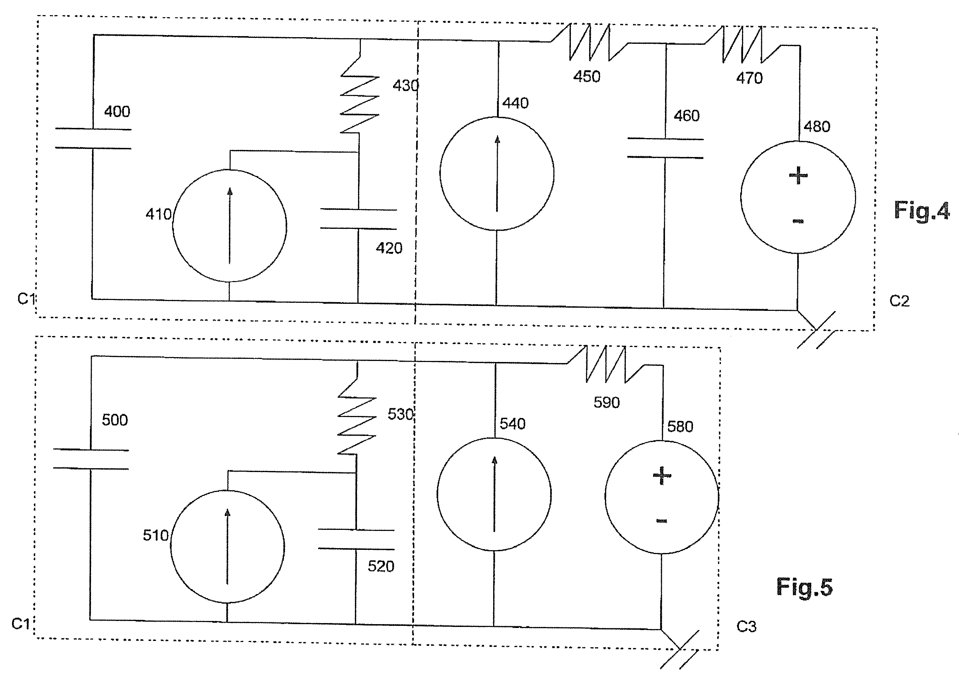

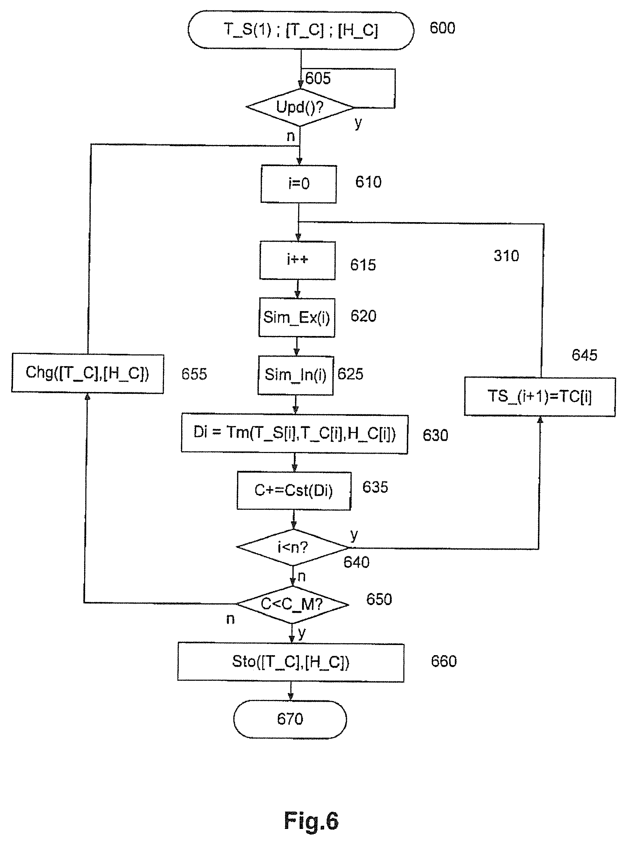

Ensuite, dans une opération 220, une fonction Clb() est exécutée pour déterminer si une calibration du dispositif de gestion thermique 2 est nécessaire. Comme on le verra avec les figures 5 et 6, le dispositif de gestion thermique 2 est agencé pour calculer la durée jusqu'à l'obtention d'une température de consigne à partir d'un modèle électrique de type RC des échanges thermiques dans le logement 3, et pour en tirer une optimisation opérationnel en fonction d'un budget.

Pour que ce modèle soit pertinent, il faut que les valeurs des éléments du circuit modélisant le logements soient adaptées en fonction des caractéristiques des éléments thermiques du logement 3, c'est-à-dire de manière non exhaustive l'inertie thermique de l'intérieur du logement 3, la capacité de chauffe de l'ensemble de chauffage 6, l'inertie thermique de l'ensemble de chauffage 6, la conduction thermique entre l'intérieur du logement 3 et l'ensemble de chauffage 6, la surface vitrée du logement 3, la conduction thermique entre l'intérieur du logement 3 et l'air extérieur, l'inertie thermique de l'enveloppe du logement 3, conduction thermique entre l'intérieur du logement 3 et l'enveloppe du logement 3, la conduction thermique entre l'enveloppe du logement 3 et l'air extérieur, etc.

La fonction Clb() peut être mise en oeuvre de plusieurs manières. Selon une première variante, les valeurs paramétriques du modèle électrique de type RC sont calculées par application d'un filtre de Kalman. Cette méthode d'estimation statistique caractérise ainsi la dynamique d'une série temporelle à travers des constantes physiques. Pour cela, la fonction Clb() peut utiliser des séries de température intérieure fournies par le dispositif de gestion thermique 2 ou utiliser des séries de mesures tirées de la sonde de température intérieure 8. Cette calibration est de préférence mise en oeuvre par communication avec le serveur 12. En effet, le serveur 12 peut servir de base de données permettant de regrouper toutes les données de calibration existantes, et permettre de calculer les valeurs paramétriques sur la base d'un nombre restreint d'échantillons dans la série temporelle, par exemple en renseignant certains paramètres comme la capacité de chauffe de l'ensemble de chauffage 6, en estimant la conduction thermique entre l'intérieur du logement 3 et l'ensemble de chauffage 6 à partir de caractéristiques du logement 3, etc. En variante, cette calibration est mise en oeuvre par le dispositif de gestion thermique 2 seul. Selon une deuxième variante, l'utilisateur rentre certains au moins ou la totalité des valeurs paramétriques du modèle électrique de type RC, soit à partir de valeurs de conversion disponibles pour chacun des éléments du modèle ou encore par entrée de caractéristiques connues comme la puissance de chauffe de l'ensemble de chauffage 6, et conversion par le dispositif de gestion thermique 2 de cette valeur en sa valeur paramétrique correspondante.

La fonction Clb() utilise également le capteur 4 pour déterminer une fonction de consommation d'énergie de l'ensemble de chauffage 6. En effet, le dispositif 2 permet, comme mentionné plus haut, d'optimiser un programme de chauffage prévu par un utilisateur pour lui permettre de respecter un budget de consommation. Comme on le verra dans la suite, cela est réalisé en prévoyant les plages de fonctionnement nécessaires à l'ensemble de chauffage 6 et en lui appliquant une fonction qui détermine la consommation énergétique équivalente. Cette détermination n'est pas immédiate car l'ensemble de chauffage 6 ne fonctionne pas toujours à 100% de ses capacités.

La figure 3 représente un exemple d'opérations mises en oeuvre par la fonction Clb() pour déterminer la fonction de consommation. La Demanderesse a réalisé divers essais et a constaté que la fonction de consommation qui approche le mieux un ensemble de chauffage domestique est basée sur une fonction du type Cons(kWh) = Pmax(1/3+2/3*exp(1-ton))/ 0 lorsque l'ensemble est éteint où ton est la durée d'allumage de l'ensemble de chauffage 6 divisé par 10 minutes.

Le but est donc de chercher une valeur de Pmax qui correspond à un profil de consommation réel. Dans une opération 300, la fonction Clb() part d'une valeur Pmax qui représente une puissance typique correspondant au contrat du logement 3.

Ensuite, dans une opération 310, une fonction Get_Nrj() est exécutée. Cette fonction fait appel au capteur 4 et/ou au stockage 12 pour recevoir des relevés de consommation récents pour l'ensemble de chauffage 6. Pour cela, le capteur 4 doit être disposé en entrée de l'ensemble de chauffage 6. En variante, le relevé exact de consommation de l'ensemble de chauffage 6 peut ne pas être directement disponible, car le capteur 4 sera relié à un emplacement plus amont de l'installation de distribution d'énergie du logement 3. Aussi, il sera possible de déterminer les données Nrj de consommation de l'ensemble de chauffage 6 au moyen d'une fonction de type désagrégation de courbe de charge (NIALM en anglais). Dans l'exemple décrit ici, les données Nrj décrivent à la fois la consommation effective de l'ensemble de chauffage 6 sur une période donnée, et les périodes pendant lesquelles celui-ci a été à l'état allumé.

Ensuite, à partir des données Nrj, une fonction Cons() est exécutée dans une opération 320. La fonction Cons() prend comme arguments la puissance Pmax et les données Nrj. Cette fonction applique la fonction de consommation décrite ci-dessus avec la puissance Pmax pour les périodes désignées par les données Nrj, et en déduit (par intégrale sur la somme des périodes) une quantité théorique d'énergie associée à la puissance Pmax. Si cette quantité correspond à la quantité d'énergie des données Nrj à 5% près, alors il est considéré que la fonction de consommation approche assez fidèlement l'ensemble de chauffage 6, la valeur Pmax est enregistrée dans une opération 330, et la fonction Clb() se termine dans une opération 340.

Sinon, si la différence entre la quantité d'énergie simulée et constatée dépasse 5%, alors la valeur Pmax est ajustée dans une opération 350 par une fonction Var() qui l'augmente ou la diminue selon le résultat de l'opération 320, puis la boucle reprend avec l'opération 320.

La fonction Clb() peut être répétée de manière périodique, par exemple à un rythme qui correspond à la période de gestion du dispositif 2. En variante, l'utilisateur peut forcer l'exécution de la fonction Clb() au moyen d'une remise à zéro accessible depuis l'interface utilisateur.

Enfin, dans une opération 240, une fonction Calc() est exécutée afin de déterminer le fonctionnement le plus optimisé d'un point de vue budgétaire pour une pluralité de plages horaires munies de consignes de température et/ou d'un mode de fonctionnement. Cela est réalisé dans l'exemple décrit ici par itération successives du modèle électrique de type RC sur la base des paramètres obtenus en sortie de fonctions Sim_Ex() et Sim_In(), et en appliquant la fonction de conversion déterminée. En variante, la fonction d'évolution du modèle électrique de type RC est inversée, de sorte que l'entrée des paramètres extrinsèques et intrinsèques retourne la durée recherchée, c'est-à-dire pour chaque période et chaque consigne la durée pendant laquelle l'ensemble de chauffage 6 doit être allumé. Toujours en variante, ce calcul est réalisé au moyen d'une table de recherche (look-up table en anglais) qui contient tous les n-uplets possibles.

La fonction Sim_Ex() a pour rôle de récupérer ou d'inférer tous les paramètres extrinsèques du modèle électrique de type RC, comme la température extérieure, ou l'ensoleillement extérieur. Cela peut par exemple être réalisé par connexion avec une sonde de température extérieure, ou par communication avec le serveur 12 ou un autre serveur pour connaître la température extérieure du lieu du logement 3. Parallèlement, ou après l'exécution de la fonction Sim_Ex(), la fonction Sim_In() a pour rôle de récupérer ou d'inférer tous les paramètres intrinsèques du modèle électrique de type RC, comme la température intérieure de départ, la température de départ de l'ensemble de chauffe 6, ou la température de départ de l'enveloppe du logement 3. Cela peut par exemple être réalisé par connexion avec la sonde de température intérieure 8, ou par interpolation ou extrapolation à partir de températures enregistrées précédemment.

La figure 4 représente un premier modèle électrique de type RC utilisé par le dispositif de gestion thermique 2. Dans cet exemple, le logement 3 est modélisé par deux circuits interconnectés C1 et C2 tous deux reliés à la masse dans leur partie inférieure, dans lesquels la température est assimilée à une tension et le rayonnement thermique à une intensité. Le circuit C1 modélise les interactions thermiques à l'intérieur du logement 3 tandis que le circuit C2 modélise les interactions thermiques avec l'extérieur du logement 3.

Le circuit C1 comprend une capacité 400, une source de courant 410, une capacité 420 et une résistance 430. La capacité 400 représente l'inertie thermique de l'intérieur du logement 3, la source de courant 410 représente le rayonnement thermique de l'ensemble de chauffage 6, la capacité 420 représente l'inertie thermique de l'ensemble de chauffage 6, et la résistance 430 représente la conductivité thermique entre l'air intérieur du logement 3 et l'ensemble de chauffage 6. La température intérieure est la tension aux bornes de la capacité 400, et la température de l'ensemble de chauffage 6 est la tension aux bornes de la capacité 420.

Le circuit C2 comprend une source de courant 440, une résistance 450, une capacité 460, une résistance 470 et une source de tension 480. La source de courant 440 représente le rayonnement thermique dû à l'ensoleillement en fonction de la surface des fenêtres du logement 14 et éventuellement de leur orientation et de l'heure, la résistance 450 représente la conductivité thermique entre l'air intérieur du logement 3 et l'enveloppe du logement 3, la capacité 460 représente l'inertie thermique de l'enveloppe du logement 3, la résistante 470 représente la conductivité thermique entre l'enveloppe du logement 3 et l'air extérieur, et la source de tension 480 représente la température extérieure. La température d'enveloppe est la tension aux bornes de la capacité 460.

Le modèle de la figure 4 présente ainsi trois variables d'état, qui sont la température intérieure, la température de l'ensemble de chauffage 6 et la température d'enveloppe.

Les paramètres extrinsèques sont ici l'ensoleillement du lieu du logement 3 et la température de l'air extérieur, tandis que les paramètres intrinsèques sont la température de consigne, la température intérieure de départ, la température de départ de l'ensemble de chauffage 6 et la température de départ de l'enveloppe du logement 3.

La figure 5 représente un deuxième modèle électrique de type RC utilisé par le dispositif de gestion thermique 2. Dans cet exemple, le logement 3 est modélisé par deux circuits interconnectés C1 et C3 tous deux reliés à la masse dans leur partie inférieure, dans lesquels la température est assimilée à une tension et le rayonnement thermique à une intensité. Le circuit C1 modélise les interactions thermiques à l'intérieur du logement 3 tandis que le circuit C3 modélise les interactions thermiques avec l'extérieur du logement 3.

Ce modèle est plus simple en ce que les interactions thermiques avec l'extérieur du logement 3 ont été simplifiées en supprimant l'enveloppe. Le circuit C1 est ainsi identique à celui de la figure 4, et d'une manière générale, les éléments de la figure 4 et de la figure 5 qui présentent des numéros de référence dont les deux derniers chiffres sont identiques sont les mêmes. Le circuit C3 se distingue du circuit C2 en ce que la résistance 450, la capacité 460, et la résistance 470 ont été remplacées par une unique résistance 590, qui représente la conductivité thermique entre l'air intérieur du logement 3 et l'air extérieur.

Le modèle de la figure 5 présente ainsi deux variables d'état, qui sont la température intérieure, et la température de l'ensemble de chauffage.

Les paramètres extrinsèques sont ici l'ensoleillement du lieu du logement 3 et la température de l'air extérieur, tandis que les paramètres intrinsèques sont la température de consigne, la température intérieure de départ et la température de départ de l'ensemble de chauffage 6.

Cela ressemble aux fonctions classiques dans les thermostats. Cependant, avec un thermostat classique, la température de consigne n'est pas toujours atteinte au sein de chaque plage horaire. Dans la pratique, à chaque début de plage, le thermostat détermine s'il doit activer ou pas l'ensemble de chauffage 6 pour atteindre la température de consigne ou rester proche de celle-ci. Il n'est donc pas rare que la température de consigne ne soit jamais atteinte lorsqu'il existe un trop grand différentiel entre les températures de consigne de deux plages horaires successives. Pour compenser cela, les utilisateurs qui ne souhaitent pas avoir froid lorsqu'ils rentrent chez eux ont tendance à élargir la plage horaire correspondant à la température de consigne la plus chaude, de sorte que le thermostat commence à chauffer le logement 3 avant leur arrivée. En combinaison, ils ont également tendance à augmenter la température de consigne la plus froide, afin que l'écart ne soit pas trop important. D'où des approximations et un gaspillage d'énergie conséquent.

À l'inverse, comme le dispositif permet de déterminer le temps nécessaire au passage entre deux températures, le chauffage du logement 3 peut être piloté non plus en plages horaires, comme avec les thermostats, mais bien en température. En effet, il devient possible de piloter au plus juste la commande de l'ensemble de chauffage 6 de sorte que chaque température de consigne de chaque plage horaire est bien obtenue, dès le début de la plage concernée, tout en respectant un budget souhaité.

En effet, un utilisateur peut indiquer par le dispositif de gestion thermique 2 plusieurs plages horaires distinctes, ainsi que les températures de consigne pour chacune de ces plages, et le budget qu'il souhaite allouer. Et le dispositif 2 peut, à partir des diverses données à sa disposition, afficher un budget estimé pour un profil de confort donné, ou piloter

La figure 6 représente un exemple d'une telle fonction.

Dans une opération 600, le dispositif de gestion thermique 2 reçoit une température intérieure de départ T_S(1), une liste de températures intérieures de consigne [T_C] et une liste d'heures de consigne [H_C].

Ensuite, dans une opération 605, une fonction Upd() vérifie s'il n'est pas nécessaire de relancer la fonction Clb(), par exemple lorsque la dernière calibration date, ou que des paramètres significatifs ont changé.

Une boucle commence ensuite dans une opération 610. Dans cette boucle, un indice i est initialisé à 0, et va être utilisé pour parcourir tous les couples température intérieure de consigne pour la période i / heure de consigne pour la période i afin de déterminer la consommation énergétique équivalente pour l'ensemble de chauffage 6.

Dans une opération 615, l'indice i est incrémenté, puis dans des opérations 620 et 625, les fonctions Sim_Ex() et Sim_In() sont exécutées, pour déterminer les paramètres nécessaires à la simulation de consommation pour la période H_C[i] courante. Bien sûr les opérations 6 peuvent être réalisées dans un ordre distinct ou en parallèle.

Ensuite, dans une opération 630, une fonction Tm() utilise les données des opérations 620 et 625 ainsi que la température intérieure de départ TS[i] courante, la température de consigne T_C[i] courante et l'heure de consigne H_C[i] pour déterminer la durée D[i] pendant laquelle l'ensemble de chauffage 6 doit être allumé pour atteindre la consigne de la période courante d'indice i.

Dans une opération 635, une fonction Cst() applique la fonction de consommation avec la durée D[i] et l'ajoute à une valeur de budget courante C. La valeur de budget courant C peut être exprimée en kWh, ou en devises lorsque des informations de tarification sont disponibles.

La boucle se termine dans une opération 640 qui teste si l'ensemble des périodes de consigne ont été simulées. Si ce n'est pas le cas, la température de consigne de la période i est définie comme température intérieure de départ de la période i+1 dans une opération 645, et la boucle reprend avec l'opération 615.

Sinon, dans une opération 650, un test détermine si le budget associé aux périodes [H_C] et aux températures de consigne [T_C] dépasse un budget fixé C_M dans une opération 650.

Si c'est le cas, alors des stratégies d'économie à confort comparable sont mises en oeuvre dans une fonction Chg([T_C],[H_C]) pour changer les consignes en vue de ne pas dépasser le budget fixé, en minimisant la perte de confort. Une fois la fonction Chg() effectuée, la boucle reprend avec l'opération 610.

Quelques stratégies peuvent inclure :
- Baisser les températures de consigne de mode économique (périodes d'absence et/ou la nuit) par exemple baisser de 1°C la température de consigne des plages horaires associées au mode économique;
- Baisser les températures de consigne de confort (périodes de présence) par exemple. baisser de 0,5°C la température de consigne des plages horaires associées au mode confort;
- Raccourcir (ou déplacer) les plages horaires associées au mode confort par exemple :
   - reporter de 30min le début du mode confort;
   - avancer de 30min la fin du mode confort.

La fonction Chg() peut prévoir un cycle d'application des stratégies ci-dessus lorsque le budget fixé n'est pas respecté par les simulations, par exemple appliquer 4 fois la première stratégie, puis quatre fois la deuxième, puis les deux variantes de la troisième stratégie, etc. Lorsqu'aucune variante ne permet de respecter le budget fixé, cela peut être indiqué sur l'interface utilisateur, et les consignes initiales sont reprises.

Lorsqu'un ensemble de consignes de températures et de plages horaires a été déterminé comme respectant le budget fixé, il est stocké pour commande de l'ensemble de chauffage 6 dans une opération 660, puis la fonction Calc() se termine dans une opération 670.

La fonction Chg()de l'opération 650 peut également utiliser n'importe quelle méthode standard d'optimisation numérique où par exemple le programme à optimiser serait constitué :
- D'une « fonction objectif » à maximiser contenant une métrique représentant le confort du client égale par exemple à moins la somme des écarts entre les température de consigne de départ et les températures intérieures prévues,
- De contraintes :
   a. La principale contrainte serait de ne pas dépasser le budget cible de l'utilisateur
   b. D'autres contraintes pourraient incorporer des règles limitant les éventuels programmes de consigne peu efficients du point de vue du fonctionnement du chauffage.

Il est également possible d'afficher en temps réel la consommation pour une période courante, ainsi que la progression par rapport à un objectif fixé.

D'autres fonctions peuvent également être mises en oeuvre. Par exemple, le dispositif de gestion thermique 2 peut prévenir un utilisateur lorsqu'il rentre des couples (température de consigne, plage horaire) successives qui sont incompatibles entre elles, par exemple en interpolant les paramètres extrinsèques aux plages horaires considérées.

La modélisation offerte par le dispositif de gestion thermique 2 pourra encore être utilisée dans d'autres fonctions. Cette modélisation est robuste, car elle ne dépend pas du passé des températures du logement 3, mais correspond à un véritable modèle thermique de celui-ci. Cela rend le dispositif de gestion thermique 2 à la fois beaucoup plus fiable, mais contre toute attente plus simple à mettre en oeuvre.

D'autres modèles de détermination de durée d'allumage, ainsi que de consommation d'énergie pourront également être retenus.

En outre, le dispositif décrit ci-dessus pourra également être adapté à des ensembles de chauffage de type climatisation ou de type climatisation / chauffage. Dans ce cas, Le modèle RC permet de modéliser la dynamique des températures du logement. Le schéma du circuit RC retenu ne change pas si l'on passe d'un mode chauffage à un mode climatisation, et seul le signe du flux de chaleur fourni par la climatisation doit être fixé à une valeur négative.

En variante, le calcul de consommation peut être simplifié en utilisant des températures journalières au lieu d'utiliser des températures de consigne, c'est-à-dire qu'une moyenne de température pour chaque jour est établie en fonction des consignes de ce jour, et que chaque jour est considéré comme présentant une unique plage de 24 heures dont la température de consigne est la température journalière. Afin d'améliorer la fiabilité des prévisions, la consommation réelle et la consommation simulée par les températures journalières peuvent être comparées tous les jours, afin de déterminer un facteur de correction pour le calcul de la consommation simulée par les températures journalières pour les simulations ultérieures.

De plus, d'autres modèles de simulation d'évolution de la température dans le logement peuvent être utilisés, qui peuvent utiliser des approches statistiques ou par apprentissage machine (« machine learning » en anglais). Par exemple, ces calculs peuvent être réalisés en utilisant une moyenne pondérée d'observations passées, une régression linéaire ou non linéaire, un filtrage récursif ou d'autres systèmes de détermination de l'évolution de systèmes dynamiques.
Enfin d'autres types de régulations de l'ensemble de chauffage peuvent être mises en oeuvre, parmi lesquelles : proportionnel, proportionnel intégrale, proportionnel intégrale dérivée. Il convient alors d'adapter les modèles des échanges thermiques et la fonction de conversion.

L'invention concerne également un procédé de calcul de consommation d'énergie comprenant :
- déterminer une durée d'activation de l'ensemble de chauffage (6) nécessaire pour respecter des consignes de température intérieure d'un logement (3) en fonction de températures extérieures, à partir d'un ensemble de données de température de consigne couplées à des plages horaires,
- calculer des données de consommation énergétique de l'ensemble de chauffage en fonction de la durée d'activation et de données de consommation passées de l'ensemble de chauffage.

L'invention concerne enfin un produit de programme informatique susceptible de coopérer avec un processeur pour constituer un dispositif tel que décrit plus haut.

## Revendications

1. Dispositif de gestion thermique (2) **caractérisé en ce qu'**il comprend un processeur, une entrée pour des données de température de consigne, de température intérieure, de température extérieure, et de consommation énergétique d'un ensemble de chauffage d'un logement (3) dans lequel est utilisé le dispositif, une sortie pour des données de consommation, et un stockage recevant des données de modèle des échanges thermiques du logement (3) et de l'ensemble de chauffage (6), le processeur mettant en oeuvre :
- une fonction de simulation déterminant une durée d'activation de l'ensemble de chauffage (6) nécessaire pour respecter des consignes de température intérieure du logement (3) en fonction de températures extérieures, et
- une fonction de consommation déterminant des données de consommation énergétique de l'ensemble de chauffage (6) en fonction d'une durée d'activation et de données de consommation passées de l'ensemble de chauffage (6),
le processeur étant en outre agencé pour calculer des données de consommation en appliquant successivement la fonction de simulation et la fonction de consommation à un ensemble de données de température de consigne couplées à des plages horaires.

2. Dispositif selon la revendication 1, dans lequel la fonction de simulation détermine une durée d'activation de l'ensemble de chauffage (6) nécessaire pour que la température intérieure du logement (3) atteigne une température de consigne à partir d'une température intérieure de départ, en fonction de données de température extérieure.

3. Dispositif selon la revendication 1 ou 2, dans lequel le processeur est en outre agencé pour déterminer si un ensemble de données de température de consigne couplées à des plages horaires conduisent à des données de consommation compatibles avec des données de consommation cibles.

4. Dispositif selon la revendication 3, dans lequel le processeur est en outre agencé pour modifier les consignes de températures lorsqu'il détermine une incompatibilité entre des données de consommation calculées et des données de consommation cibles.

5. Dispositif selon la revendication 3 ou 4, dans lequel le processeur est en outre agencé pour modifier les plages horaires lorsqu'il détermine une incompatibilité entre des données de consommation calculées et des données de consommation cibles.

6. Dispositif selon l'une des revendications 3 à 5, dans lequel le processeur est agencé pour déterminer si l'ensemble de données de température de consigne et/ou les plages horaires modifiées conduisent à des données de consommation compatibles avec des données de consommation cibles.

7. Dispositif selon l'une des revendications précédentes, dans lequel la durée d'activation et les données de consommation passées de l'ensemble de chauffage (6) sont déterminées par l'application d'une méthode de type NIALM.

8. Dispositif selon l'une des revendications précédentes, dans lequel la fonction de simulation applique une régulation de type tout ou rien, proportionnelle, proportionnelle intégrale, ou proportionnelle intégrale dérivée.

9. Dispositif selon l'une des revendications précédentes, dans lequel le dispositif est agencé pour afficher une comparaison entre des données de consommation pour une période courante et des données de consommation cibles pour la période courante.

10. Procédé de calcul de consommation d'énergie comprenant :
- déterminer une durée d'activation de l'ensemble de chauffage (6) nécessaire pour respecter des consignes de température intérieure d'un logement (3) en fonction de températures extérieures, à partir d'un ensemble de données de température de consigne couplées à des plages horaires,
- calculer des données de consommation énergétique de l'ensemble de chauffage (6) en fonction de la durée d'activation et de données de consommation passées de l'ensemble de chauffage (6).
